# EUROPÄISCHE PATENTSCHRIFT

(11) **EP 2 840 153 B1**
(45) Veröffentlichungstag und Bekanntmachung des Hinweises auf die Patenterteilung: **09.08.2017**
(21) Anmeldenummer: 14171307.3
(22) Anmeldetag: 05.06.2014
(51) Int. Cl.: C21D 9/46, C21D 1/34, C21D 1/42, B21D 37/16, B21J 1/06

(54) **Temperierstation mit Induktorerwärmung**
Tempering station with inductor heating
Station de chauffage dotée de dispositif de chauffage à inducteur

(30) Priorität: 20.08.2013 DE 102013108972
(43) Veröffentlichungstag der Anmeldung: 25.02.2015
(73) Patentinhaber: Benteler Automobiltechnik GmbH, 33102 Paderborn (DE)
(72) Erfinder: Horn, Stefan, 34308 Bad Emstal (DE); Käsewieter, Karoline, 33102 Paderborn (DE); Werneke, Simon, 33142 Büren (DE)
(74) Vertreter: Ksoll, Peter

(56) Entgegenhaltungen:
- EP-A1- 2 014 777
- DE-A1-102011 102 167

## Beschreibung

Die vorliegende Erfindung betrifft eine Temperierstation zur Eingliederung in eine Warmformlinie zum Warmumformen und Presshärten von metallischen Bauteilen gemäß den Merkmalen im Oberbegriff von Patentanspruch 1.

Aus dem Stand der Technik ist es bekannt, Kraftfahrzeugbauteile aus metallischem Werkstoff herzustellen. Hierunter sind zum einen Karosseriebauteile zu verstehen, die die Außenhaut des Kraftfahrzeuges darstellen, zum anderen werden Kraftfahrzeugbauteile auch als Strukturbauteile hergestellt, beispielsweise als Kraftfahrzeugsäulen, Querträger oder aber auch Längsträger. Zunehmend ist die Anforderung der Kraftfahrzeugindustrie dahingehend, Leichtbauteile herzustellen, die zugleich jedoch eine hohe Crashperformance sowie Steifigkeit besitzen.

Neben der Herstellung von Kraftfahrzeugbauteilen aus beispielsweise Leichtbauwerkstoffen wie Aluminium hat sich auch die Herstellung von Kraftfahrzeugbauteilen aus hochfesten oder aber höchstfesten Stahlwerkstoffen etabliert.

Hierzu wird eine Platine auf eine Temperatur oberhalb ihrer Austenitisierungstemperatur (Ac3) erwärmt und sodann im warmen Zustand umgeformt und derart schnell abgekühlt, dass eine Abschreckhärtung erfolgt. Dieser Vorgang ist auch als Warmumformen und Presshärten bekannt.

Neben der Herstellung von vollständig warmumgeformt und pressgehärteten Bauteilen ist es aus dem Stand der Technik ebenfalls bekannt, diese Bauteile mit partiell gehärteten Eigenschaften herzustellen. Hierzu wird beispielsweise das Bauteil nur partiell auf über Austenitisierungstemperatur erwärmt oder aber nur partiell abgeschreckt.

Zur Serienherstellung von warmumgeformten und pressgehärteten Bauteilen sind Warmumformlinien bekannt, bei denen beispielsweise Platinen in Durchlauföfen oder aber Etagenöfen auf über Austenitisierungstemperatur erwärmt werden und sodann entsprechenden Umform- und Kühlwerkzeugen, die auch als Kombinationswerkzeug ausgebildet sein können, zugeführt werden.

Weiterhin aus dem Stand der Technik bekannt sind Temperierstationen, die zwischen den einzelnen Herstellungsschritten eingesetzt werden, um die Bauteile auf den Temperaturen zu halten oder aber weitergehend zu erwärmen bzw. zu kühlen. Diese Temperierstationen sind weiterhin einzusetzen, um eventuelle Ausfallzeiten eines Umformwerkzeugs, beispielsweise durch Wartung oder aber einen Fehler, zu kompensieren, so dass nicht entsprechend die gesamte Warmformlinie angehalten bzw. runtergefahren werden muss.

Beispielsweise sind aus der EP 2 014 777 A1 sowie der DE 10 2011 102 167 A1 Erwärmungseinrichtungen zur Kontakterwärmung von metallischen Bauteilen bekannt.

Aufgabe der vorliegenden Erfindung ist es, eine Temperierstation zur Eingliederung in eine Warmformlinie bereit zu stellen, wobei die Temperierstation hinsichtlich ihrer Wirtschaftlichkeit gegenüber aus dem Stand der Technik bekannten Temperierstationen verbessert ist und mit der Temperierstation partiell unterschiedliche Temperaturen in dem zu temperierenden Bauteil einstellbar sind, wobei die Temperierstation optional zur Temperierung verschiedener Bauteile einsetzbar ist.

Die zuvor genannte Aufgabe wird erfindungsgemäß mit einer Temperierstation gemäß den Merkmalen im Patentanspruch 1 gelöst.

Vorteilhafte Ausführungsvarianten der vorliegenden Erfindung sind Gegenstand der abhängigen Patentansprüche.

Die Temperierstation zur Eingliederung in eine Warmformlinie zum Warmumformen und Presshärten von metallischen Bauteilen, wobei die Temperierstation einen Induktor als Wärmequelle aufweist und mittels der Temperierstation in dem Bauteil Bereiche mit voneinander verschiedenen Temperaturen einstellbar sind, ist erfindungsgemäß dadurch gekennzeichnet, dass ein Unterwerkzeug und/oder ein Oberwerkzeug einen Flächeninduktor aufweist und auf dem Flächeninduktor eine Temperierplatte zur Aufnahme des zu erwärmenden Bauteils angeordnet ist, wobei in der Temperierplatte mindestens ein Kühlkanal zur Durchleitung eines gasförmigen Kühlmediums angeordnet ist, so dass zwei Bereiche mit voneinander verschiedenen Temperaturen in der Temperierplatte einstellbar sind.

Im Rahmen der Erfindung ist somit besonders bevorzugt ein Flächeninduktor in der Temperierstation, welche maßgeblich aus einem Unterwerkzeug ausgebildet ist, wobei auf die Vertikalrichtung bezogen über dem Flächeninduktor eine Temperierplatte gelagert ist. Bei dem Bauteil handelt es sich im Rahmen der Erfindung insbesondere um eine aus einem warmumform- und härtbaren metallischen Werkstoff bestehende Platine. Im Rahmen der Erfindung kann es sich jedoch bei dem Bauteil auch um eine leicht vorgeformte Platine oder aber auch um ein bereits vorgeformtes Bauteil handeln. Erfindungsgemäß können weiterhin insbesondere Platinen mit voneinander verschiedenen Wandstärken, beispielsweise tailored rolled blanks oder aber auch tailored welded blanks, auf die Temperierplatte aufgelegt werden. Die Temperierung erfolgt dabei aufgrund des Anlagenkontaktes von Bauteil und Temperierplatte und der dabei entstehenden Wärmeleitung. Es werden somit in der Temperierplatte zwei voneinander verschiedene Temperaturbereiche eingestellt, insbesondere mindestens zwei voneinander verschiedene Temperaturbereiche. Die zwei voneinander verschiedenen Temperaturbereiche der Temperierplatte temperieren dann über den Anlagekontakt in dem Bauteil zwei Bereiche mit voneinander verschiedenen Temperaturen.

Insbesondere werden die zwei voneinander verschiedenen Temperaturbereiche in der Temperierplatte mithilfe des Flächeninduktors und der Kühlkanäle erzeugt bzw. eingestellt.

Der Flächeninduktor erwärmt somit die Temperierplatte, wobei die Temperierplatte dann wiederum das auf die Temperierplatte aufgelegte Bauteil erwärmt. Die Temperierplatte kann dabei das aufgelegte Bauteil auf eine höhere Temperatur erwärmen gegenüber der Temperatur, mit der das Bauteil auf die Temperierplatte aufgelegt ist. Die Temperierplatte kann das Bauteil jedoch auch auf der Temperatur, mit dem es auf die Temperierplatte aufgelegt ist, halten. Insbesondere erfolgt jedoch das Halten oder das Erwärmen partiell, wobei in der Temperierplatte mindestens ein Bereich ausgebildet ist, der aufgrund des durch die Temperierplatte strömenden Kühlmediums eine von der restlichen Temperierplatte verschiedene Temperatur aufweist, insbesondere eine geringere Temperatur. Bei dem Kühlmedium handelt es sich insbesondere um ein gasförmiges Kühlmedium, insbesondere Druckluft, die mit auswählbarer, variierender Strömungsgeschwindigkeit und/oder Druck durch den Kühlkanal strömt. Es werden somit in der Temperierplatte voneinander verschiedene Bereiche mit voneinander verschiedenen Temperaturen eingestellt, so dass aufgrund der bei der Kontaktierung entstehenden Wärmeleitung auch in dem Bauteil die voneinander verschiedenen temperierten Bereiche erzeugt werden.

Im Rahmen der Erfindung ist mithin an dem Unterwerkzeug und/oder an dem Oberwerkzeug mindestens ein Flächeninduktor, bevorzugt sind zwei Flächeninduktoren, insbesondere jedoch aber auch drei oder mehr Flächeninduktoren nebeneinander angeordnet. Die mehreren, nebeneinander angeordneten Flächeninduktoren bilden dabei ein Flächeninduktorfeld aus. Hierdurch ist es wiederum möglich, die einzelnen Flächeninduktoren individuell mit Strom zu beaufschlagen, so dass durch die Flächeninduktoren auch wiederum voneinander verschiedene Temperaturbereiche in den Temperierplatten einstellbar sind.

Im Rahmen der Erfindung ist weiterhin unter Unterwerkzeug bzw. Oberwerkzeug ein derartiger Aufbau zu verstehen, dass eine Halterung oder aber ein Gestell an der Oberseite und an der Unterseite der Temperierstation ausgebildet sind. Auswechselbar sind dann produktindividuell bzw. produktspezifisch erfindungsgemäß bevorzugt ausschließlich die Temperierplatten, nicht jedoch die Gestelle an sich.

Besonders bevorzugt ist im Rahmen der Erfindung die Temperierplatte zweiteilig oder mehrteilig ausgebildet, wobei zwischen den Temperierplattenteilen ein Dehnungsspalt ausgebildet ist und insbesondere in dem Dehnungsspalt ein Isolierwerkstoff angeordnet ist. Mithin werden die einzelnen Temperierplattenteile durch den Flächeninduktor erwärmt, wobei wiederum mindestens ein Temperierplattenteil Kühlkanäle aufweist, durch die auch das Kühlmedium gefördert wird. Somit ist der Temperierplattenteil, durch den das Kühlmedium gefördert wird, in Relation zu dem Temperierplattenteil, welches nur durch den Flächeninduktor erwärmt wird, kälter, was wiederum zur Einstellung von zwei voneinander verschiedenen Temperaturen an dem Bauteil selber führt. Durch den Dehnungsspalt wird insbesondere ein Wärmeübergang durch Wärmeleitung innerhalb der Temperierplatte vermieden, da der Dehnungsspalt bevorzugt mit Luft, insbesondere mit einem Isolierwerkstoff, gefüllt ist, so dass gerade kein Wärmeübergang von dem Temperierplattenteil mit höherer Temperatur zu dem Temperierplattenteil mit in Relation dazu geringerer Temperatur erfolgt.

Im Rahmen der Erfindung ist zumindest ein Kühlkanal in unmittelbarer Nähe zu dem Dehnungsspalt selber angeordnet. Hierdurch wird insbesondere vermieden, dass entsprechend der Temperierplattenteil, der gerade kälter sein soll, sich durch den Induktor und/oder aufgrund des Wärmeüberganges von den benachbarten Bereichen des Temperierplattenteils mit höherer Temperatur erwärmt. An dem zu temperierenden Bauteil wird somit ein besonders scharf berandeter Übergangsbereich eingestellt, so dass in der Weiterverarbeitung ein Bereich mit höchster Festigkeit und dagegen ein scharf berandeter Bereich mit eher höherer Duktilität einstellbar sind.

Besonders bevorzugt sind in dem kühleren Bereich, mithin in dem kühleren Temperierplattenteil, innerhalb des Temperierplattenteils flächig verteilt ein oder mehrere Kühlkanäle angeordnet. Der eine Kühlkanal kann dabei als Kühlschlange flächig verteilt unterhalb der Temperierplattenvollfläche strömen. Im Rahmen der Erfindung ist es jedoch insbesondere aus fertigungstechnischer Sicht für den Temperierplattenteil besonders bevorzugt derart, dass die Kühlkanäle in Form von Bohrungen, Ausnehmungen oder Nuten durch den gesamten Temperierplattenteil geradlinig verlaufen. Gerade bei Kühlnuten ist der Temperierplattenteil mindestens zweiteilig ausgebildet, so dass ein Schließblech aufgesetzt wird, so dass die Nut zu einem Kanal ausgebildet wird.

Der geradlinige Verlauf oder aber die mehreren Kühlkanäle bieten einen weiteren Vorteil derart, dass die Kühlleistung des durch die Kühlkanäle strömenden Kühlmediums von dem Dehnungsspalt aus in Richtung zu dem kühleren Bereich variieren kann. So wird insbesondere im Rahmen der Erfindung die Kühlleistung des durch die Kühlkanäle strömenden Kühlmediums in dem Kühlkanal in unmittelbarer Nähe des Dehnungsspaltes höher ausgebildet und in Richtung zu dem kühleren Bereich der Temperierplatte dazu abnehmend ausgebildet. In der Folge ist es möglich, in dem Bauteil selber eine homogene Temperaturverteilung bis an den zu berandenden Bereich zu schaffen, so dass die Einflüsse im Bereich des Dehnungsspaltes durch Wärmestrahlung und erhöhten Wärmeeintrag der wärmeren Temperierplattenteile derart kompensiert werden, dass im Bauteil eine, wie bereits zuvor erwähnt, homogene Temperaturverteilung mit scharf berandeten Übergangsbereich eingestellt wird.

Die Kühlleistung des Kühlmediums kann ferner durch Variation des Druckes und/oder der Strömungsgeschwindigkeit individuell variiert werden, so dass auf Produktionsschwankungen reagiert werden kann oder aber für verschiedene Bauteile entsprechend durch Wahl von Druck oder Strömungsgeschwindigkeit des Kühlmediums die gewünschte Bauteiltemperatur einstellbar ist. Bei dem Kühlmedium handelt es sich insbesondere um Druckluft, es kann jedoch auch ein zirkulierender Luftstrom eingesetzt werden, so dass nicht auf Kompressoren zum Bereitstellen der Druckluft zurückgegriffen werden muss, sondern der Luftstrom durch Ventilatoren einstellbar ist. Die Druckluft weist bevorzugt einen Druck zwischen 0,1 MPa und 1 MPa auf, wobei hiermit in Verbindung mit der Temperierplatte in dem Bauteil Temperaturen zwischen 200 °C und 950 °C problemlos einstellbar sind. Weiterhin bevorzugt ist es beispielsweise möglich, gezielt turbulente Strömungen in den Kühlkanälen hervorzurufen oder aber den Kühlkanal auch mit einem Innenprofil auszugestalten, so dass ein erhöhter Wärmeaustausch zwischen Kühlmedium und dem Temperierplattenteil, in dem sich der Kühlkanal befindet, erfolgt. Damit wiederum dieser Wärmeaustausch auch an das Bauteil weitergegeben wird, ist es weiterhin möglich, auf die Temperierplatte ein Wärmeleitmittel, beispielsweise eine Wärmeleitpaste oder ähnliches, aufzutragen.

In einer weiteren bevorzugten Ausführungsvariante der vorliegenden Erfindung ist die Temperierstation dadurch gekennzeichnet, dass die Temperierplatte an die Kontur des zu temperierenden Bauteils angepasst ist. In einfachster Ausgestaltung wird eine ebene Platine mit homogener Wandstärke mit gleichbleibender Blechdicke auf die Temperierplatte aufgelegt. Folglich hat die Temperierplatte entsprechend hierzu korrespondierend eine glatte bzw. ebene Oberfläche. Im Rahmen der Erfindung ist es jedoch auch möglich, beispielsweise ein tailored welded oder tailored rolled blank zu temperieren. Hierbei ist im Verlauf eine voneinander verschiedene Wandstärke zu verzeichnen, so dass die Platine nicht vollflächig plan aufliegen würde. Die Temperierplatte hat dann entsprechende Höhensprünge, so dass im Wesentlichen vollflächig der Anlagenkontakt auch bei einem tailored blank sichergestellt ist. Handelt es sich bei dem Bauteil um eine Vorform oder ein tailored blank, welche bereits dreidimensional komplex geformt ist, so ist es weiterhin im Rahmen der Erfindung möglich, dass die Temperierplatte auch entsprechend eine dreidimensional, hierzu korrespondierende Oberflächenkontur aufweist, so dass auch die Vorform auf der Temperierplatte nahezu vollständig anliegt. Ist das Bauteil ein bereits nahezu oder endgeformtes Bauteil, so besitzt die Temperierplatte eine hierzu korrespondierende Oberfläche.

Weiterhin bevorzugter Bestandteil der Temperierstation ist ein Oberwerkzeug, das absenkbar ist. Das Oberwerkzeug weist insbesondere eine derartige Oberfläche zu dem zu temperierenden Bauteil hin auf, dass hier eine Isolierschicht ausgebildet ist und insbesondere eine flexible Isolierschicht. Durch die Isolierschicht ist es möglich, den Energiebedarf, der zur Temperierung des Bauteils vonnöten ist, gering zu halten, da Abwärme mit Verlustenergie über die Bauteiloberfläche hinweg weitestgehend vermieden wird. Ferner wird durch eine flexible Isolierschicht sichergestellt, dass diese wiederum das Bauteil vollflächig abdeckt und bestmöglich an die darunter befindliche Temperierplatte andrückt, so dass von der Temperierplatte an das Bauteil ein optimaler konduktiver Wärmeübergang stattfindet.

Weiterhin bevorzugt sind unterhalb der Temperierplatte Schieber vorgesehen, mit denen das temperierte Bauteil anhebbar ist. Die Schieber sind insbesondere in Form von Stößeln ausgebildet, die sich maßgeblich in Vertikalrichtung bewegen, so dass das Bauteil nach Abschluss des Temperiervorgangs zumindest minimal anhebbar ist und von einem Manipulator oder ähnlichem ergreifbar ist und der weiteren Verwendung zugeführt werden kann. Im Rahmen der Erfindung ist es jedoch auch möglich, dass die Schieber bzw. Stößel in einem Winkel zwischen 45° und 90° zur Oberfläche der Temperierplatte sich linear bewegen, so dass aufgrund des winkeligen Ausfahrens zur Oberfläche der Temperierplatte selber nicht nur ein Anheben des Bauteils erfolgt, sondern das Bauteil auch in Richtung zur weiteren Verwendung bewegbar ist. Beispielsweise ist es somit mittels einer Greifzange, die seitlich der Temperierplatte angesetzt wird, möglich, aufgrund der horizontalen Bewegung ein seitliches Überstehen des Bauteils und somit ein leichteres Ergreifen mittels einer Zange durchzuführen.

Weiterhin ist es möglich, entsprechende Öffnungen oder aber auch Nuten in den Temperierplatten auszubilden, über die es möglich ist, die Temperierplatten selbst anzuheben.

Weiterhin bevorzugt weist der Induktor zur flächenmäßigen Verteilung unterhalb der Temperierplatte einen mäanderförmigen Verlauf auf. Die jeweiligen Enden des Induktors können beispielsweise von einer Seite zentral der flächenmäßigen Verteilung zugeführt werden, aber auch von zwei sich gegenüberliegenden Seiten. Auf die Vertikalrichtung bezogen sind unterhalb der Induktorschleifen Konzentratoren angeordnet, welche insbesondere einen U-förmigen Querschnitt besitzen. Die jeweiligen Schenkel des U's können dabei den Induktorstrang auf die Vertikalrichtung bezogen seitlich umgreifen. Durch den U-förmigen Querschnitt werden insbesondere die von dem Induktor abgegebenen Feldlinien auf die Temperierplatte bzw. in die Temperierplatte hinein konzentriert geleitet.

Die Konzentratoren selber sind dabei weiterhin besonders bevorzugt als Konzentratorbleche ausgebildet, wobei es beispielsweise möglich ist, die Konzentratorbleche in unterschiedlichen Ausführungen in Bezug auf die Wandstärke und/oder die Länge der Schenkel des U-förmigen Querschnitts vorzuhalten und diese entsprechend der einzubringenden Heizleistung in die Temperierplatte austauschbar an der Temperierstation vorzusehen.

Weiterhin besonders bevorzugt ist unterhalb des Induktors eine Isolierschicht angeordnet. Die Isolierschicht sorgt dafür, dass die durch den Induktor und/oder der Temperierplatte erzeugte Wärme in Richtung zu dem Bauteil gelenkt wird und nicht auf die Vertikalrichtung bezogen nach unten abgeleitet wird. Auch durch diese Maßnahme ist es möglich, den Energieverbrauch der erfindungsgemäßen Temperierstation weitestgehend zu optimieren.

Weiterhin bevorzugt ist unterhalb der Isolierschicht auf die Vertikalrichtung bezogen wiederum eine Kühlplatte mit Kühlbohrungen zur Durchleitung eines Kühlmediums angeordnet. Bei dieser Kühlplatte handelt es sich bevorzugt um eine Kühlplatte aus einem metallischen Bauteil, wobei als Kühlmedium hier eine Kühlflüssigkeit oder aber auch ein gasförmiges Kühlmedium einsetzbar sind. Die Kühlplatte unterhalb der Isolierschicht sorgt dafür, dass die an die Temperierstation angrenzenden oder umgebenden Anlagenteile keine thermische Beeinflussung erfahren.

Weiterhin besonders bevorzugt ist die Temperierplatte selbst über dem Induktor mit einem Abstand angeordnet, wobei Abstandhalter den Induktor durchgreifen und die Temperierplatte auf den Abstandhaltern aufliegt. Gerade in Verbindung mit den Konzentratoren ist es somit möglich, einen optimalen Energieeintrag in die Temperierplatte derart zu gestalten, dass der Energieverbrauch der Temperierstation minimiert wird. Bei den Abstandhaltern handelt es sich besonders bevorzugt um keramische Passstifte. Die keramischen Passstifte sind weiterhin besonders bevorzugt in Öffnungen bzw. Bohrungen der unterhalb der Isolierschicht angeordneten Kühlplatte angeordnet. Weiterhin bevorzugt ist es möglich, dass über die Abstandhalter der Abstand zwischen Induktor und Temperierplatte einstellbar ist. Besonders bevorzugt erfolgt dies derart, dass die Abstandhalter in ihrer Höhe verstellbar sind, bevorzugt sind Madenschrauben an den Abstandhaltern, insbesondere unterhalb der Abstandhalter, vorgesehen, so dass über Verdrehung dieser der Abstand zwischen Temperierplatte und Induktor einstellbar ist.

Weiterhin besonders bevorzugt ist der Induktor als mäanderförmige Induktorschleife mit parallel zueinander beabstandeten Leiterbahnen ausgebildet, wobei die Leitern an ihren Enden jeweils über einen Bogen miteinander gekoppelt sind. Dabei kann der Bogen bzw. die gesamte Induktorschleife einstückig und werkstoffeinheitlich ausgebildet sein. Der Induktor kann jedoch auch aus mehreren Bauteilen ausgebildet sein, die dann beispielsweise mit einem thermischen Fügeverfahren miteinander stoffschlüssig gekoppelt werden. Die Leiterbahn selbst, insbesondere die gesamte Induktorschleife, weist dabei besonders bevorzugt einen rechteckigen Querschnitt auf, wobei im Rahmen der Erfindung auch andere Querschnitte, beispielsweise ovale oder aber auch runde Querschnitte oder Mischformen der vorgenannten Querschnitte, denkbar sind.

Im Rahmen der Erfindung ist weiterhin bei der Anordnung von mehreren Flächeninduktoren nebeneinander ein jeweiliger Flächeninduktor werkstoffeinheitlich bevorzugt nach den oben genannten Kriterien ausgebildet und die Induktoren können wiederum untereinander verbunden werden oder aber auch jeweils separat über Leitungen angesteuert werden.

Im Rahmen der Erfindung hat es sich weiterhin als besonders vorteilig für einen insbesondere homogenen Temperatureintrag in die Temperierplatte erwiesen, wenn die Wanddicke der Temperierplatte mit einer Breite der Leiterbahn des Induktors, insbesondere bei einer im Querschnitt rechteckigen Leiterbahn, in einem Verhältnis zwischen 10 : 1 und 1 : 5, bevorzugt 4 : 1 und 1 : 3 und insbesondere von 2 : 1 bis 1 :2, ganz besonders bevorzugt von 1 : 1 ausgebildet ist. Dies bedeutet beispielsweise, dass die Wanddicke der Temperierplatte einfach gewertet wird und im Gegensatz dazu die Breite der Leiterbahn bis zu 2,5-fach. Hierdurch erfolgt eine besonders homogene Verteilung der Feldlinien, insbesondere der zueinander benachbarten Leiterbahnen, und somit eine homogene, induktive Erwärmung der Temperierplatte.

Weiterhin besonders vorteilig ist ein Verhältnis von Wandstärke der Temperierplatte zu einem Abstand zwischen den einzelnen Leiterbahnen des Induktors in einem Verhältnis von 10 : 1 und 1 : 5, bevorzugt 4 : 1 und 1 : 3 und insbesondere von 2 : 1 bis 1 : 2, ganz besonders bevorzugt von 1 : 1. Auch hier ist wiederum beispielsweise die Wandstärke der Temperierplatte einfach zu zählen und der Abstand zwischen den Leiterbahnen bis zu dem 2,5-fachen davon. Auch hierbei erfolgt eine homogene Verteilung der erzeugten Feldlinien und somit eine insbesondere homogene, induktive Erwärmung der Temperierplatte und somit des auf diese aufgelegten Bauteils.

Im Rahmen der Erfindung ist es weiterhin vorstellbar, dass der Abstand zwischen den einzelnen Leiterbahnen des Induktors voneinander verschieden ausgebildet ist. Beispielsweise in Teilbereichen, die weniger stark erwärmt werden sollen, ist der Abstand größer ausgebildet, wohingegen in Teilbereichen, in denen die Bauteilplatine stärker erwärmt werden soll, der Abstand kleiner ausgebildet ist. Bevorzugt wird im Rahmen der Erfindung jedoch ein konstanter Abstand der einzelnen Leiterbahnen des Induktors zueinander gewählt.

Weiterhin vorstellbar ist es im Rahmen der Erfindung, dass die Wandstärke der Temperierplatte voneinander verschieden sein kann. Insbesondere bei einer zweigeteilten Temperierplatte ist es gerade zur Temperierung von tailored blanks möglich, Temperierplattenteile mit voneinander verschiedenen Wandstärken einzusetzen. Hierdurch können dann die einzelnen Dickensprünge des tailored blank entsprechend kompensiert werden und wiederum die einzelnen Bereiche des tailored blanks mit der entsprechenden Bauteilanforderung erwärmt bzw. temperiert werden.

Weitere Vorteile, Merkmale, Eigenschaften und Aspekte der vorliegenden Erfindung sind Gegenstand der nachfolgenden Beschreibung. Bevorzugte Ausführungsvarianten werden in den schematischen Figuren dargestellt. Diese dienen dem einfachen Verständnis der Erfindung. Es zeigen:
- Figur 1a bis c: eine perspektivische Ansicht auf eine erfindungsgemäße Temperierstation;
- Figur 2: eine Querschnittsansicht durch eine erfindungsgemäße Temperierstation;
- Figur 3a bis c: eine Querschnittsansicht der erfindungsgemäßen Temperierstation; eine Längsschnittansicht durch eine Kühlmaske und eine Draufsicht auf einen erfindungsgemäßen Induktor;
- Figur 4: eine Querschnittsansicht durch eine erfindungsgemäße Temperierstation für ein tailored blank und
- Figur 5a bis c: eine erfindungsgemäße Temperierstation in einer Querschnittsansicht in verschiedenen Ausführungsvarianten.

In den Figuren werden für gleiche oder ähnliche Bauteile dieselben Bezugszeichen verwendet, auch wenn eine wiederholte Beschreibung aus Vereinfachungsgründen entfällt.

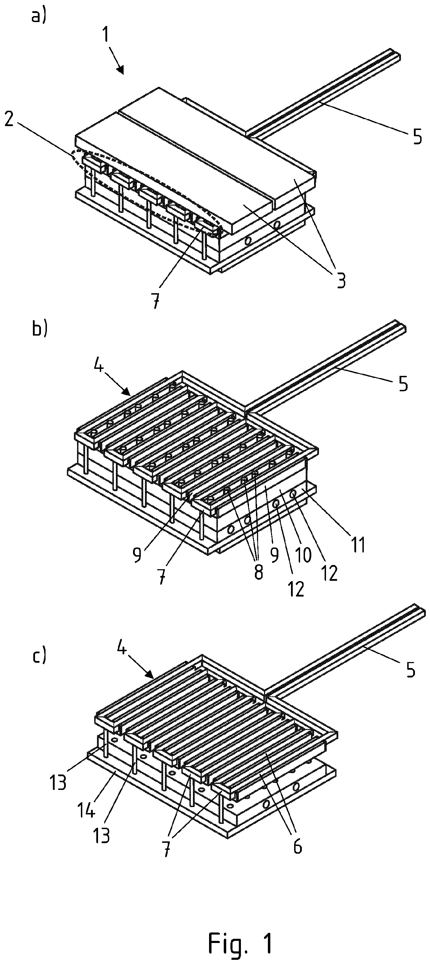

Figur 1a bis c zeigen eine erfindungsgemäße Temperierstation 1 in perspektivischer Ansicht in verschiedenen Zusammenbausituationen. Figur 1a zeigt die Temperierstation 1 in perspektivischer Ansicht bestehend aus einem Unterwerkzeug 2, wobei auf dem Unterwerkzeug 2 zwei Temperierplatten 3 aufgelegt sind, auf die dann wiederum ein nicht näher dargestelltes Bauteil bzw. eine nicht näher dargestellte Platine zur Temperierung aufgelegt werden. Unterhalb der Temperierplatten 3 sind gut erkennbar in Figur 1b und c der Flächeninduktor 4 mit einer zentralen Zu- und Ableitung 5 sowie den einzelnen Leiterbahnen 6 angeordnet, wobei die Leiterbahnen 6 an ihren Enden jeweils über Bögen 7 miteinander gekoppelt sind. Die Temperierplatten 3 selbst stehen dabei nicht über die Bögen 7 über, was wiederum in Figur 1a gut erkennbar ist, sondern die Bögen 7 stehen randseitig über die Temperierplatten 3 über. Mithin sind die Temperierplatten 3 an ihrer Unterseite ausschließlich von den Leiterbahnen 6 abgedeckt. In Figur 1b ersichtlich ist, dass Passstifte 8 zwischen den Leiterbahnen 6 angeordnet sind, wobei die Passstifte 8 dazu dienen, einen Abstand zwischen Temperierplatte 3 und Flächeninduktor 4 herzustellen. Besonders bevorzugt sind die Passstifte 8 in ihrer Höhe verstellbar. Unterhalb der Leiterbahnen 6 sind Konzentratoren 9 in Form von Konzentratorblechen angeordnet, die die Leiterbahnen 6 von unten umfangsseitig umgreifen und mithin das Induktionsfeld in Richtung zu der Temperierplatte 3 leiten. Unterhalb der Konzentratoren 9 ist wiederum eine Isolierschicht, bevorzugt in Form einer Isolierplatte 10, angeordnet, wiederum gefolgt von einer Kühlplatte 11 mit Kühlbohrungen 12. Der Induktor selber ist über Bolzen 13, insbesondere Gewindestifte, bevorzugt Messingstifte, auf einer Grundplatte 14 gelagert, so dass dieser einen konstanten Abstand zur darunter befindlichen Kühlplatte 11 und/oder Isolierplatte 10 aufweist.

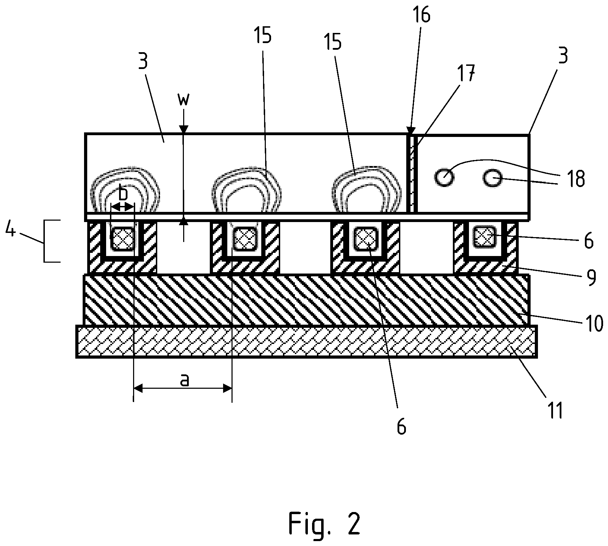

Figur 2 zeigt eine Querschnittsansicht durch die erfindungsgemäße Temperierstation 1, wobei gut erkennbar ist die Kühlplatte 11, die Isolierplatte 10 sowie die sich auf der Isolierplatte 10 im Querschnitt U-förmig ausgebildeten Konzentratoren 9, die die Leiterbahnen 6 des Flächeninduktors 4 umgreifen, um somit die Feldlinien 15 konzentriert in Richtung der Temperierplatten 3 zu leiten. Die Temperierplatte 3 selbst ist hier dargestellt zweiteilig ausgebildet, wobei zwischen den Temperierplatten 3 ein Spalt 16 ausgebildet und in dem Spalt 16 selbst wiederum ein Isolierwerkstoff 17 angeordnet ist. Die auf die Bildebene bezogene rechte Isolierplatte 10 weist ferner Kühlkanäle 18 in Form von Kühlbohrungen auf, so dass in der rechten Temperierplatte 3 eine geringere Temperatur eingestellt wird als in der linken Temperierplatte 3. Nicht dargestellt sind hier auf der rechten Seite bei dem Flächeninduktor 4 Feldlinien 15, wobei diese im Falle eines steuerbaren Induktors diese ausschaltbar sind oder aber durch die Kühlleistung eines Kühlmediums, welches durch den Kühlkanal 18 strömt, eine vernachlässigbare Erwärmung der rechten Temperierplatte 3 hervorrufen. Figur 2 zeigt weiterhin die Breite b der Leiterbahn 6, die erfindungsgemäß in Relation zu der Wandstärke w der Temperierplatte 3 setzbar ist, sowie den Abstand a der Leiterbahnen 6, der erfindungsgemäß in Relation zu der Wandstärke w der Temperierplatte 3 gesetzt wird.

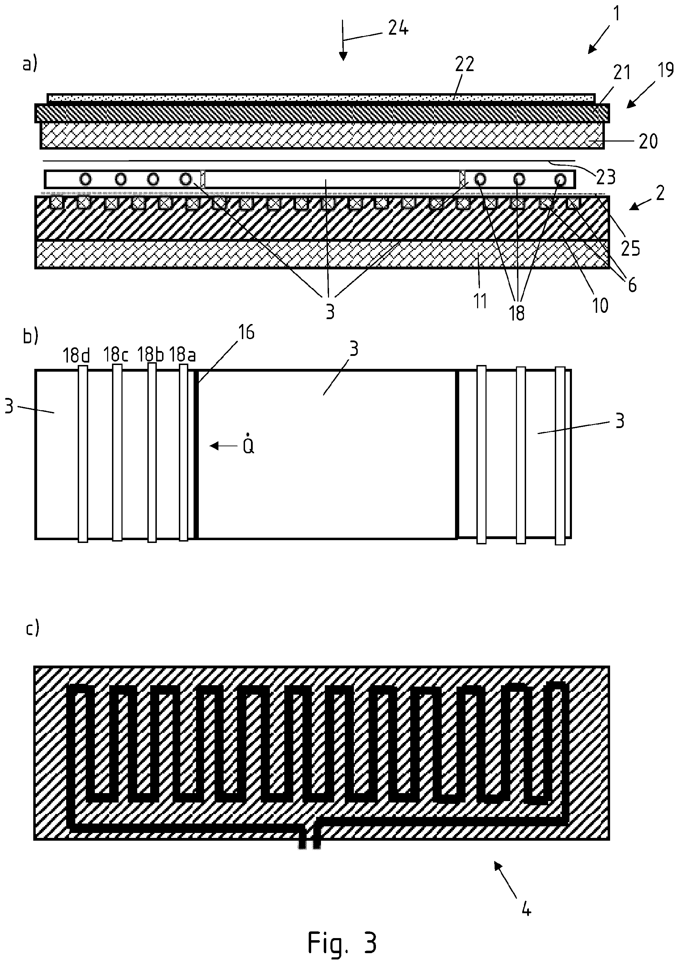

Figur 3 zeigt einen weiteren Aufbau einer erfindungsgemäßen Temperierstation 1, mit einem Unterwerkzeug 2 sowie mit einem Oberwerkzeug 19. Das Oberwerkzeug 19 selbst ist dabei aus einer Isolierplatte 20, einer biegesteifen Grundplatte 21 sowie einer Toleranzausgleichmatte 22 ausgebildet. Ein zwischen Oberwerkzeug 19 und Unterwerkzeug 2 befindliches Bauteil 23, hier als Platine ausgebildet, welche temperiert werden soll, wird somit durch ein Absenken des Oberwerkzeugs 19 in Absenkrichtung 24 an die hier dargestellte dreiteilige Temperierplatte 3 angedrückt und somit konduktiv temperiert. Dies bedeutet, auf einem jeweiligen Temperaturniveau gehalten bzw. auf ein jeweiliges Temperaturniveau gebracht. Die auf die Bildebene bezogen mittlere Temperierplatte 3 weist keine Kühlkanäle 18 auf und folglich eine höchste Temperatur, welche zwischen 200 °C und 900 °C betragen kann. Die auf die Bildebene bezogene linke bzw. rechte Temperierplatte 3 weist wiederum Kühlkanäle 18 auf, durch die ein Kühlmedium strömt und somit eine von der mittleren Temperierplatte 3 verschiedene Temperatur besitzt. Unterhalb der Temperierplatten 3 kann optional ferner eine elektrische Isolierungsschicht 25 eingegliedert werden, so dass die Temperierplatten 3 elektrisch von dem darunter befindlichen Flächeninduktor 4 entkoppelt sind. In dieser Variante dargestellt sind die einzelnen Leiterbahnen 6 in eine Isolierplatte 10 eingelassen und weisen keine Konzentratoren auf. Unterhalb der Isolierplatte 10 ist dann wiederum eine Stützplatte oder aber eine Kühlplatte 11 angeordnet.

Figur 3b zeigt eine Längsschnittansicht durch die erfindungsgemäßen Temperierplatten 3, wobei dargestellt sind am Beispiel der linken Temperierplatte 3 vier verschiedene Kühlkanäle 18. Von dem Spalt zwischen linker und mittlerer Temperierplatte 3 ausgehend strömt durch den am Spalt 16 befindlichen Kühlkanal 18a ein Kühlmedium mit höchstem Volumenstrom und/oder höchstem Druck in Relation zu den nach außen hin angeordneten Kühlkanälen 18b bis 18d. Hier nimmt der Druck bzw. der Volumenstrom nach außen hin ab, so dass ein von der mittleren Isolierplatte 10 übergehender Wärmestrom *Q̇* aufgrund der größten Kühlleistung des Kühlkanals 18a kompensiert wird. Auf die rechte Bildebene bezogen kann eine analoge Kühlung stattfinden.

Figur 3c zeigt hierzu dann eine Draufsicht auf den erfindungsgemäßen Flächeninduktor 4, wobei zu erkennen ist, dass dieser nahezu die vollständige Grundfläche des Unterwerkzeugs 2 abdeckt.

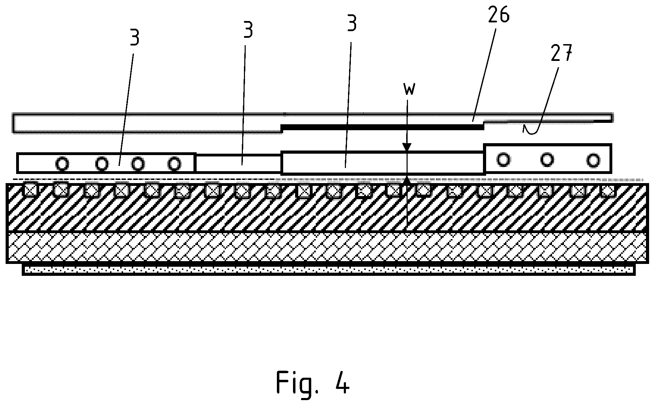

Figur 4 zeigt eine alternative Ausführungsvariante mit Temperierplatten 3, welche voneinander verschiedene Wandstärken w aufweisen. Hierdurch ist es möglich, eine Platine in Form eines tailored blanks 26 aufzunehmen, so dass diese mit ihrer Unterseite 27 nahezu vollständig auf den Temperierplatten 3 aufliegt.

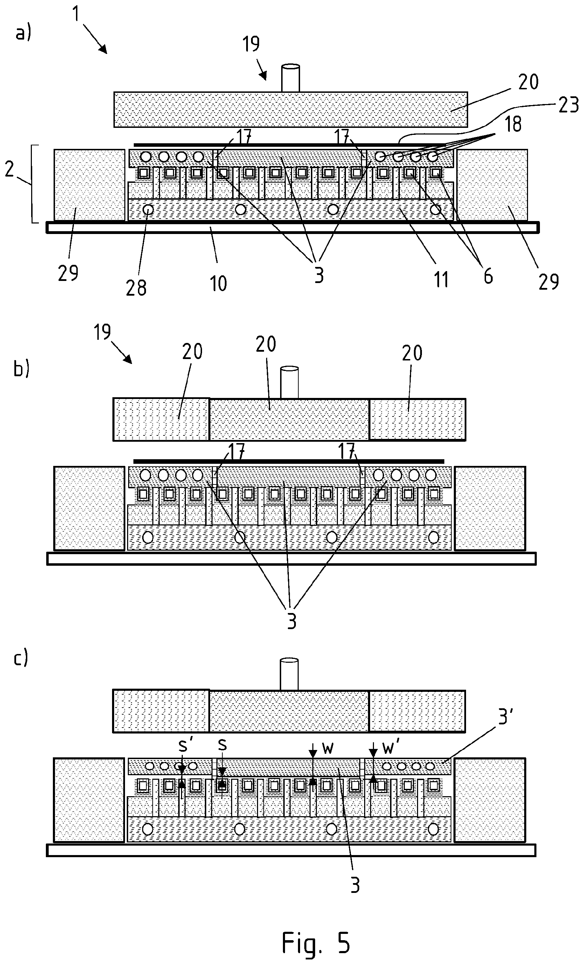

Ferner dargestellt ist in Figur 5a ein Querschnitt durch eine erfindungsgemäße Temperierstation 1, welche wiederum ein Unterwerkzeug 2 aufweist, auf das ein Bauteil 23, hier dargestellt in Form einer Platine, auflegbar ist. In dem Unterwerkzeug 2 ist eine untere Isolierplatte 29 ausgebildet, wobei in der unteren Isolierplatte 29 wiederum Kühlkanäle 28 ausgebildet sind, durch die ein Kühlmedium leitbar ist. Auf der Temperierplatte 3 selbst sind dann Leiterbahnen 6 eines entsprechenden Flächeninduktors 4 angeordnet, die darüber befindliche Temperierplatten 3 erwärmen. Die Temperierplatten 3 selbst sind segmentiert in eine auf die Bildebene bezogen linke Temperierplatte 3, mittlere Temperierplatte 3 und rechte Temperierplatte 3. Die linke und die rechte Temperierplatte 3 weisen jeweils Kühlkanäle 18 auf, so dass diese gegenüber der mittleren Temperierplatte 3 aktiv kühlbar sind. Erfindungsgemäß erfolgt dies durch Luft. Ferner ist eine Isolierplatte 20 eines Oberwerkzeugs 19 dargestellt, die auf die Platine abgesenkt werden kann, so dass die Wärmeverluste möglichst gering gehalten werden. Unterhalb des Unterwerkzeugs 2 ist eine Isolierplatte 10 angeordnet, um auch hier die Wärmeverluste gering zu halten. Darüber hinaus sind weiterhin seitliche Isolierelemente 29 angeordnet, so dass auch ein seitlicher Wärme- bzw. Energieverlust nahezu ausgeschlossen ist. Hierdurch ist es erfindungsgemäß möglich, die Temperierstation 1 mit einem geringen Energiebedarf zu betreiben.

In Abwandlung ist in Figur 5b dazu die Isolierplatte 20 des Oberwerkzeugs 19 segmentiert, so dass auf die Bildebene bezogen eine linke Isolierplatte 20, eine mittlere Isolierplatte 20 und eine rechte Isolierplatte 20 des Oberwerkzeugs 19 ausgebildet sind. Dies trägt dann der auf der segmentierten Temperierplatte 3 unterschiedlichen Erwärmung Rechnung. Die Temperierplatten 3 sind in Figur 5a, b und c dargestellt jeweils mit einem Isolierwerkstoff 17 voneinander thermisch entkoppelt. Hierdurch ist es möglich, einen besonders scharf berandeten, unterschiedlichen Festigkeitsbereich zu realisieren.

In der Ausführungsform nach Figur 5c weist eine segmentierte Temperierplatte 3 zusätzlich eine unterschiedliche Wandstärke w und w' auf. So ist die Wandstärke w' der gekühlten Temperierplatten 3' geringer als die Wandstärke w der ungekühlten Temperierplatte 3. Dadurch entsteht ein Spalt s' zwischen den Temperierplatten 3' und dem Induktor 6, welcher größer ist als der Spalt s zwischen gekühlter Temperierplatte 3' und Induktor 6. Durch den größeren Spalt wird eine verringerte Wärmeeinkopplung in diese Temperierplatten 3' erreicht und somit kann die aktive Kühlleistung vergleichsweise gering gewählt werden. Dies ist durch im Vergleich zu Figur 1a und 1b kleineren Kühlkanälen 18 angedeutet.

### Bezugszeichen:

1 - Temperierstation
2 - Unterwerkzeug
3 - Temperierplatte
3' - Temperierplatte
4 - Flächeninduktor
5 - Zu- und Ableitung zu 4
6 - Leiterbahn
7 - Bogen
8 - Passstift
9 - Konzentrator
10- Isolierplatte
11 - Kühlplatte
12- Kühlbohrung
13- Bolzen
14- Grundplatte
15- Feldlinie
16- Spalt
17- Isolierwerkstoff
18- Kühlkanal
18a - Kühlkanal
18b - Kühlkanal
18c - Kühlkanal
18d - Kühlkanal
19 - Oberwerkzeug
20- Isolierplatte zu 19
20' - Isolierplatte
21 - Grundplatte zu 19
22- Toleranzausgleichsplatte zu 19
23 - Bauteil
24 - Absenkrichtung
25 - elektrische Isolierschicht
26 - tailored blank
27 - Unterseite zu 26
28 - Kühlkanäle
29 - Isolierplatte
a - Abstand
b - Breite
s' - Spalt
w - Wandstärke
w' - Wandstärke
*Q̇* - Wärmestrom

## Patentansprüche

1. Temperierstation zur Eingliederung in eine Warmformlinie zum Warmumformen und Presshärten von metallischen Bauteilen, wobei die Temperierstation (1) einen Induktor als Wärmequelle aufweist und mittels der Temperierstation (1) in dem Bauteil (23) Bereiche mit voneinander verschiedenen Temperaturen einstellbar sind, **dadurch gekennzeichnet, dass** ein Unterwerkzeug (2) und/oder ein Oberwerkzeug (19) mindestens einen Flächeninduktor (4) aufweist und auf dem Flächeninduktor (4) eine Temperierplatte (3) zur Aufnahme des zu erwärmenden Bauteils (23) angeordnet ist, wobei in der Temperierplatte (3) mindestens ein Kühlkanal (18) zur Durchleitung eines gasförmigen Kühlmediums angeordnet ist, so dass zwei Bereiche mit voneinander verschiedenen Temperaturen einstellbar sind.

2. Temperierstation nach Anspruch 1, **dadurch gekennzeichnet, dass** an dem Unterwerkzeug (2) und/oder an dem Oberwerkzeug (19) zwei Flächeninduktoren (4) nebeneinander angeordnet sind, wobei die zwei Flächeninduktoren (4) ein Flächeninduktorfeld ausbilden.

3. Temperierstation nach Anspruch 1 oder 2, **dadurch gekennzeichnet, dass** die Temperierplatte (3) zweiteilig oder mehrteilig ausgebildet ist, wobei zwischen den Temperierplattenteilen ein Spalt (16) ausgebildet ist und insbesondere in dem Spalt (16) ein Isolierwerkstoff (17) angeordnet ist.

4. Temperierstation nach Anspruch 3, **dadurch gekennzeichnet, dass** ein Kühlkanal (18) in unmittelbarer Nähe zu dem Spalt (16) angeordnet ist.

5. Temperierstation nach einem der Ansprüche 1 bis 4, **dadurch gekennzeichnet, dass** in einem kühleren Bereich innerhalb der Temperierplatte (3) flächig verteilt ein oder mehrere Kühlkanäle (18, 18a, 18b, 18c, 18d) angeordnet sind.

6. Temperierstation nach Anspruch 5, **dadurch gekennzeichnet, dass** die Kühlleistung des durch die Kühlkanäle (18) strömenden Kühlmediums von dem Spalt (16) aus in Richtung zu dem kühleren Bereich abnimmt.

7. Temperierstation nach einem der vorstehenden Ansprüche, **dadurch gekennzeichnet, dass** die Temperierplatte (3) in ihrer Kontur dem zu temperierenden Bauteil (23) angepasst ist.

8. Temperierstation nach einem der vorstehenden Ansprüche, **dadurch gekennzeichnet, dass** ein Oberwerkzeug (19) vorgesehen ist, das insbesondere absenkbar ist und eine Isolierschicht auf das Bauteil (23), der der Temperierplatte (3) gegenüberliegenden Seite, aufbringt.

9. Temperierstation nach einem der vorstehenden Ansprüche, **dadurch gekennzeichnet, dass** unterhalb der Temperierplatte (3) Schieber vorgesehen sind, mit denen das temperierte Bauteil (23) anhebbar ist.

10. Temperierstation nach einem der vorstehenden Ansprüche, **dadurch gekennzeichnet, dass** der Induktor mäanderförmig oder schneckenförmig verläuft und unterhalb der Induktorschleifen Konzentratoren (9) angeordnet sind, welche insbesondere einen u-förmigen Querschnitt besitzen.

11. Temperierstation nach dem vorstehenden Anspruch, **dadurch gekennzeichnet, dass** die Konzentratoren (9) als Konzentratorbleche mit U-förmigem Querschnitt ausgebildet sind.

12. Temperierstation nach einem der vorstehenden Ansprüche, **dadurch gekennzeichnet, dass** unterhalb des Induktors eine Isolierschicht angeordnet ist, insbesondere eine Vermikulitplatte.

13. Temperierstation nach dem vorstehenden Anspruch, **dadurch gekennzeichnet, dass** unterhalb der Isolierschicht eine Kühlplatte (11) mit Kühlbohrungen (12) zur Durchleitung eines Kühlmediums vorgesehen ist.

14. Temperierstation nach einem der vorstehenden Ansprüche, **dadurch gekennzeichnet, dass** die Temperierplatte (3) über dem Induktor mit einem Abstand a angeordnet ist, wobei Abstandhalter den Induktor durchgreifen und die Temperierplatte (3) auf den Abstandhaltern aufliegt.

15. Temperierstation nach Anspruch 14, **dadurch gekennzeichnet, dass** die Abstandhalter in ihrer Höhe einstellbar sind, insbesondere durch Madenschrauben.

16. Temperierstation nach Anspruch 14 oder 15, **dadurch gekennzeichnet, dass** die Abstandhalber als keramische Passstifte (8) ausgebildet sind und bevorzugt in Öffnungen in der Temperierplatte (3) eingreifen.

17. Temperierstation nach Anspruch 14 bis 16, **dadurch gekennzeichnet, dass** der Induktor als mäanderförmige Induktorschleife mit parallel zueinander beabstandeten Leiterbahnen (6) ausgebildet ist, wobei die Leiter in ihren Enden jeweils über einen Bogen (7) miteinander gekoppelt sind.

18. Temperierstation nach Anspruch 17, **dadurch gekennzeichnet, dass** die Leiterbahnen (6) einen rechteckigen Querschnitt aufweisen.

19. Temperierstation nach Anspruch 17 oder 18, **dadurch gekennzeichnet, dass eine** Wandstärke (w) der Temperierplatte (3) mit einer Breite (b) der Leiterbahn (6) in einem Verhältnis zwischen 10 : 1 und 1 : 5, bevorzugt 4 : 1 und 1 : 3 und insbesondere von 2 : 1 bis 1 : 2, ganz besonders bevorzugt von 1 : 1 ausgebildet ist.

20. Temperierstation nach einem der Ansprüche 17 bis 19, **dadurch gekennzeichnet, dass** die Wandstärke w der Temperierplatte (3) mit einem Abstand (a) zwischen den Leiterbahnen (6) in einem Verhältnis von 10 : 1 und 1 : 5, bevorzugt 4 : 1 und 1 : 3 und insbesondere von 2 : 1 bis 1 : 2, ganz besonders bevorzugt von 1 : 1 ausgebildet ist.

## Claims

1. Temperature control station for integration into a thermoforming line for hot forming and press hardening metal components, wherein the temperature control station (1) has an inductor as the heat source and areas in the component (23) can be set at different temperatures by means of the temperature control station (1), **characterised in that** a lower tool (2) and/or an upper tool (19) has at least one area inductor (4) and a temperature control plate (3) for accommodating the component (23) to be heated is arranged on the area inductor (4), wherein at least one cooling channel (18) is arranged in the temperature control plate (3) for transit of a gaseous cooling medium so that two areas can be set at different temperatures.

2. Temperature control station according to claim 1, **characterised in that** two area inductors (4) are arranged next to each other on the lower tool (2) and/or on the upper tool (19), wherein the two area inductors (4) form one area inductor field.

3. Temperature control station according to claim 1 or 2, **characterised in that** the temperature control plate (3) is formed of two or three parts, wherein a gap (16) is designed between the temperature control plate parts and an insulation material (17) is arranged in the gap (16) in particular.

4. Temperature control station according to claim 3, **characterised in that** a cooling channel (18) is arranged in close proximity to the gap (16).

5. Temperature control station according to any one of claims 1 to 4, **characterised in that** one or a plurality of cooling channels (18, 18a, 18b, 18c, 18d) are arranged in an evenly distributed manner in a cooler area inside the temperature control plate (3).

6. Temperature control station according to claim 5, **characterised in that** the cooling capacity of the cooling medium flowing through the cooling channels (18) decreases from the gap (16) towards the cooler area.

7. Temperature control station according to any one of the preceding claims, **characterised in that** the contour of the temperature control plate (3) is adapted to the component (23) whose temperature is to be controlled.

8. Temperature control station according to any one of the preceding claims, **characterised in that** an upper tool (19) is provided which is lowerable in particular and applies an insulating layer to the component (23) on the side opposite the temperature control plate (3).

9. Temperature control station according to any one of the preceding claims, **characterised in that** sliders are provided underneath the temperature control plate (3) with which the component (23) whose temperature is controlled can be lifted.

10. Temperature control station according to any one of the preceding claims, **characterised in that** the inductor runs in a meander-like or spiral-like fashion, and concentrators (9) are arranged underneath the inductor loops which have a u-shaped cross-section in particular.

11. Temperature control station according to any one of the preceding claims, **characterised in that** the concentrators (9) are designed as concentrator sheets with a u-shaped cross-section.

12. Temperature control station according to any one of the preceding claims, **characterised in that** provision is made underneath the inductor for an insulating layer, in particular a vermiculite plate.

13. Temperature control station according to any one of the preceding claims, **characterised in that** provision is made underneath the insulating layer for a cooling plate (11) with cooling holes (12) for transit of a cooling medium.

14. Temperature control station according to any one of the preceding claims, **characterised in that** the temperature control plate (3) is arranged above the inductor at a distance a, wherein spacers clamp the inductor and the temperature control plate (3) lies on the spacers.

15. Temperature control station according to claim 14, **characterised in that** the height of the spacers can be adjusted, in particular by grub screws.

16. Temperature control station according to claim 14 or 15, **characterised in that** the spacers are designed as ceramic dowel pins (8) and preferably engage into openings in the temperature control plate (3).

17. Temperature control station according to claims 14 to 16, **characterised in that** the inductor is designed as a meander-like inductor loop with conductor tracks (6) spaced so as to be parallel to each other, wherein the ends of the conductors are linked together by an arch (7).

18. Temperature control station according to claim 17, **characterised in that** the conductor tracks (6) have a rectangular cross-section.

19. Temperature control station according to claim 17 or 18, **characterised in that** a wall thickness (w) of the temperature control plate (3) is designed with a width (b) of the conductor track (6) in a ratio of 10:1 and 1:5, preferably 4:1 and 1:3 and in particular of 2:1 to 1:2, particularly preferably of 1:1.

20. Temperature control station according to any one of claims 17 to 19, **characterised in that** the wall thickness w of the temperature control plate (3) is designed with a distance (a) between the conductor tracks (6) in a ratio of 10:1 and 1:5, preferably 4:1 and 1:3 and in particular of 2:1 to 1:2, particularly preferably of 1:1.

## Revendications

1. Poste de mise à température destiné à être intégré dans une ligne de formage à chaud pour la déformation à chaud et le durcissement à la presse de pièces métalliques, dans lequel le poste de mise à température (1) comporte un inducteur comme source de chaleur et dans lequel des zones avec des températures différentes les unes des autres peuvent être réglées dans la pièce (23) au moyen du poste de mise à température (1), **caractérisé en ce qu'**un outil inférieur (2) et/ou un outil supérieur (19) comportent au moins un inducteur plan (4) et une plaque de mise à température (3) est disposée sur l'inducteur plan (4) pour recevoir la pièce (23) à chauffer, au moins un canal de refroidissement (18) étant agencé dans la plaque de mise à température (3) pour conduire un fluide de refroidissement gazeux de telle sorte que deux zones avec des températures différentes l'une de l'autre peuvent être réglées.

2. Poste de mise à température selon la revendication 1, **caractérisé en ce que** deux inducteurs plans (4) sont agencés l'un à côté de l'autre au niveau de l'outil inférieur (2) et/ou de l'outil supérieur (19), les deux inducteurs plans (4) formant un champ d'inducteur plan.

3. Poste de mise à température selon la revendication 1 ou 2, **caractérisé en ce que** la plaque de mise à température (3) est réalisée en deux parties ou en plusieurs parties, une fente (16) étant formée entre les parties de plaque de mise à température et, en particulier, un matériau isolant (17) étant agencé dans la fente (16).

4. Poste de mise à température selon la revendication 3, **caractérisé en ce qu'**un canal de refroidissement (18) est agencé à proximité immédiate de la fente (16).

5. Poste de mise à température selon l'une des revendications 1 à 4, **caractérisé en ce qu'**un ou plusieurs canaux de refroidissement (18, 18a, 18b, 18c, 18d) sont disposés, répartis en surface, dans une zone plus froide à l'intérieur de la plaque de mise à température (3).

6. Poste de mise à température selon la revendication 5, **caractérisé en ce que** la puissance de refroidissement du fluide de refroidissement s'écoulant dans les canaux de refroidissement (18) diminue à partir de la fente (16) en direction de la zone plus froide.

7. Poste de mise à température selon l'une des revendications précédentes, **caractérisé en ce que** le contour de la plaque de mise à température (3) est adapté à la pièce (23) à mettre à température.

8. Poste de mise à température selon l'une des revendications précédentes, **caractérisé en ce qu'**il est prévu un outil supérieur (19) qui peut être notamment abaissé et qui applique une couche isolante sur la pièce (23) du côté à l'opposé de la plaque de mise à température (3).

9. Poste de mise à température selon l'une des revendications précédentes, **caractérisé en ce qu'**il est prévu en dessous de la plaque de mise à température (3) des coulisseaux avec lesquels la pièce (23) mise à température peut être soulevée.

10. Poste de mise à température selon l'une des revendications précédentes, **caractérisé en ce que** l'inducteur s'étend sous forme de méandres ou hélicoïdale et des concentrateurs (9), qui ont en particulier une section transversale en forme de U, sont agencés en dessous des boucles d'inducteur.

11. Poste de mise à température selon la revendication précédente, **caractérisé en ce que** les concentrateurs (9) sont conçus comme des tôles de concentrateur avec une section transversale en forme de U.

12. Poste de mise à température selon l'une des revendications précédentes, **caractérisé en ce qu'**une couche isolante, en particulier une plaque de vermiculite, est agencée en dessous de l'inducteur.

13. Poste de mise à température selon l'une des revendications précédentes, **caractérisé en ce qu'**une plaque de refroidissement (11) avec des trous de refroidissement (12) pour conduire un fluide de refroidissement est prévue en dessous de la couche isolante.

14. Poste de mise à température selon l'une des revendications précédentes, **caractérisé en ce que** la plaque de mise à température (3) est agencée à une distance a au-dessus de l'inducteur, des éléments de mise à distance traversant l'inducteur et la plaque de mise à température (3) reposant sur les éléments de mise à distance.

15. Poste de mise à température selon la revendication 14, **caractérisé en ce que** les éléments de mise à distance sont réglables en hauteur, en particulier par des vis sans tête.

16. Poste de mise à température selon la revendication 14 ou 15, **caractérisé en ce que** les éléments de mise à distance sont conçus comme des boulons d'ajustage (8) en céramique et pénètrent de préférence dans des ouvertures dans la plaque de mise à température (3).

17. Poste de mise à température selon la revendication 14 à 16, **caractérisé en ce que** l'inducteur est conçu comme une boucle d'inducteur en forme de méandres avec des pistes conductrices (6) distantes les unes des autres et parallèles les unes aux autres, les conducteurs étant couplés les uns aux autres au niveau de leurs extrémités à chaque fois par l'intermédiaire d'un arc (7).

18. Poste de mise à température selon la revendication 17, **caractérisé en ce que** les pistes conductrices (6) ont une section transversale rectangulaire.

19. Poste de mise à température selon la revendication 17 ou 18, **caractérisé en ce qu'**une épaisseur de paroi (w) de la plaque de mise à température (3) est conçue avec une largeur (b) de la piste conductrice (6) dans un rapport compris entre 10:1 et 1:5, de préférence entre 4:1 et 1:3 et en particulier entre 2:1 et 1:2, de manière tout à fait particulière et préférée dans un rapport de 1:1.

20. Poste de mise à température selon l'une des revendications 17 à 19, **caractérisé en ce que** l'épaisseur de paroi w de la plaque de mise à température (3) est conçue avec une distance (a) entre les pistes conductrices (6) dans un rapport compris entre 10:1 et 1:5, de préférence entre 4:1 et 1:3 et en particulier entre 2:1 et 1:2, de manière tout à fait particulière et préférée dans un rapport de 1:1.
